# EUROPEAN PATENT APPLICATION

(11) **EP 0 732 345 A1**
(43) Date of publication of application: **18.09.1996**
(21) Application number: 96103059.0
(22) Date of filing: 29.02.1996
(51) Int. Cl.: C08F 287/00, C08F 279/02

(54) **High impact polystyrene with high gloss and process for its preparation**

(30) Priority: 16.03.1995 IT MI950505
(71) Applicant: ENICHEM S.p.A., I-20124 Milano (IT)
(72) Inventor: Monti, Luca, Mantova (IT); Romagnoli, Giuseppe, Rivarolo (MN) (IT); Nocci, Roberto, Virgilio (MN) (IT)
(74) Representative: Gennari, Marco

(57) **Abstract**

High impact polystyrene comprising a polymeric matrix and a rubber phase dispersed and/or grafted to said polymeric matrix, wherein the rubber phase consists of a mixture of:
i) a dienic rubber; and
ii) a linear 1,3 conjugated styrene-diene block copolymer, wherein said block copolymer has a diene content of between 40 and 70% by weight.

## Description

The present invention relates to a high impact polystyrene (HIPS) having an excellent balance of physico-mechanical properties and a high gloss and a polymerization process, continuous and in mass-solution, for its preparation.

More specifically, the present invention relates to a high impact polystyrene having an excellent impact strength combined with a high gloss and to the process for its preparation.

Rubber reinforced vinylaromatic (co)polymers, in particular dienic rubber, are a well-known group of engineering polymers available on the market and widely described in literature. Specific examples of these copolymers are:
- styrene/acrylonitrile copolymers containing particles of rubber, such as polybutadiene, dispersed in the polymeric matrix, generally known as ABS resins; and
- high impact polystyrene, generally known as HIPS, comprising a continuous phase of polystyrene in which particles of rubber, for example polybutadiene, are dispersed.

The rubber reinforced vinylaromatic (co)polymers can be prepared by means of various polymerization processes, which can be in continuous or batch, in emulsion, in mass, in solution or combined mass/suspension.

The mass and continuous polymerization process is known and described, for example, in U.S patents 2.694.692, 3.243.481 and 3.658.946 and in published European patent application 400.479.

This process consists in dissolving the rubber material in the vinylaromatic monomer or in the mixture of monomers, possibly adding a radical polymerization initiator and an inert diluent and then polymerizing the resulting solution. Immediately after the beginning of the polymerization reaction, the solution of the rubber material in the monomer (or mixture of monomers) separates into two phases, of which a first phase, consisting of a solution of the rubber in the monomer, initially forms the continuous phase, whereas the second phase, consisting of a solution of the resulting copolymer in the monomer, remains dispersed in droplets in this phase. As the polymerization and consequently the conversion proceed, the quantity of the second phase increases at the expense of the first. As soon as the volume of the second phase is equal to that of the first, a phase change, commonly known as "phase inversion" takes place.

When this phase inversion takes place, droplets of rubber solution are formed in the polymer solution. These droplets of rubber solution in turn englobe small droplets of what has now become the continuous polymeric phase. During the process, there is also a grafting of the rubber on the backbone of the polymer chain.

The polymerization is generally carried out in several steps. In the first polymerization step, called pre-polymerization, the solution of the rubber in the monomer or mixture of monomers is polymerized until a conversion is reached which allows the phase inversion. The polymerization is subsequently continued up to the desired conversion.

Mass-solution polymerization enables the production of rubber reinforced vinylaromatic copolymers having a good balance of physico-mechanical properties, whereas the surface gloss, particularly in the case of polystyrene, is not always completely satisfactory.

It is known, in fact, that the surface gloss of vinylaromatic (co)polymers reinforced with diene rubber can be improved by reducing the dimensions of the rubber particles to values of less than 1 micrometer and that this result can be obtained by vigorous stirring during polymerization. This approach however has not been successful as the linear polybutadiene rubber normally used, with a low or medium content of cis isomer, have a high molecular weight and consequently a high viscosity in solution, which means that, even with vigorous stirring, a satisfactory dispersion of the rubber cannot be obtained, at least for the rubber content normally used for these (co)polymers (5-15% by weight).

A possible solution could lie in the use of linear polybutadiene rubbers with a low molecular weight and, consequently, reduced viscosity in solution. These rubbers however have the known drawback of "cold flow", which greatly limits the possibility of their storage and transport.

It is also known, as specified for example in U.S. patent 4.493.922 or in "Rubber Toughened Plastics", C. Keith Riew Editor American Chemical Society, Washington, 1989, that high impact styrene (co)polymers with a good balance between gloss and mechanical properties can be obtained by mixing, in suitable proportions, materials containing rubber phases with a small and large morphology. For example, a preferred combination consists of a polystyrene matrix containing from 3 to 30% by weight of rubber, calculated as polybutadiene. This rubber phase consists in turn of 60-95% by weight of capsule particles, with dimensions of between 0.2 and 0.6 micrometers, and 40-5% of cellular particles with dimensions of between 2 and 8 micrometers.

According to what is described in U.S. patent 4.493.922, the mixing can be carried out in an extruder, feeding two high impact polystyrenes with the above morphologies. Otherwise the two prepolymers can be prepared in two different reactors, the streams joined in the desired ratio, the polymerization carried out up to a certain conversion degree (for example 80%) and finally the solvent and non-converted monomers devolatilized. The mixtures thus obtained are reported as having better mechanical properties with respect to those of the single components.

In an example of the above U.S. patent, rubbers recommended for the preparation of the two prepolymers with a fine and large morphology are, respectively:
- a linear diblock styrene/butadiene copolymer (containing 40% by weight of styrenic units); and
- a mixture consisting of 20% by weight of medium cis linear polybutadiene and 80% of the above diblock copolymer.

The published European patent application 412.801 describes a process for the preparation in mass-solution and in continuous of copolymers reinforced with rubber (HIPS and ABS) having bimodal distribution of the particles. According to the disclosures, two prepolymers are separately formed in two parallel plug-flow type reactors up to a conversion of between 10 and 50% based on the starting monomers. The first prepolymer contains rubber particles with dimensions of between 0.05 and 1.5 micrometers, the second prepolymer contains rubber particles with dimensions of between 0.7 and 10 micrometers. The two prepolymers are extracted in continuous from the respective reactors, mixed in suitable proportions and the polymerization is carried out in two or more reactors, arranged in series, until the desired conversion is reached (65-80%). The solvent and non-converted monomers are subsequently removed by devolatilization.

The proportion between the two streams of prepolymer must be such that the rubber particles deriving from the first prepolymer consist of between 50 and 95% by weight of the rubber content of the end product. This process is particularly suitable for manufacturing HIPS with small particles of between 0.2 and 0.7 micrometers and large particles of between 1.5 and 5 micrometers and ABS with small particles of between 0.5 and 0.8 micrometers and large particles of between 1 and 3 micrometers. The polymers thus prepared are presented as having a balance of mechanical/gloss properties which is higher than that of the products obtained by the mechanical mixing of the single components in an extruder.

The rubbers recommended are, respectively:
- a linear diblock stryrene/butadiene copolymer (containing from 30 to 40% of styrene units) for the prepolymer with a small morphology; and
- a linear polybutadiene with a high viscosity for the prepolymer with a large morphology.

Both of the above methods on the one hand offer a solution to the problem but on the other have several disadvantages.

The preparation of the two end-polymers with the appropriate morphologies, large and small, and their mixing in an extruder not only lead to an increase in the production costs, but also to a certain degradation of the molecular characteristics. In fact, the materials are subjected to a further thermal stress, after the devolatilization phase, during melting and mixing in the extruder.

In the case, on the other hand, of the other process described, i.e. which involves forming two prepolymers in parallel reactors, mixing the streams and then completing the polymerization, it is necessary to have at least one extra polymerization reactor with respect to the traditional plant equipment. This then requires process controls of both the morphologies formed and, above all, of the two prepolymers in the mixing phase. Any productive inefficiency in this section of the plant can irreparably impair the quality of the product.

The Applicant has now surprisingly found that it is possible to produce a high impact polystyrene having high gloss and mechanical properties, such as impact strength, using as rubber material (i) a diene rubber or (ii) a linear block copolymer based on a vinylaromatic monomer and a 1,3 conjugated diene, wherein said block copolymer has a diene content of between 40 and 70% by weight. The production of the polystyrene of the present invention can be carried out in a conventional mass-solution and continuous polymerization plant for HIPS, consisting of two or more plug-flow reactors, arranged in series, and one or more devolatilizers, as described in the U.S. patents 2.694.692, 3.243.481 and 3.658.946 mentioned above or in the published European patent application 400.479.

The use of a mixture of rubbers in the preparation of high impact vinylaromatic (co)polymers is already known in literature, for example in published European patent application 629.658. This application describes high impact vinylaromatic resins which are obtained in the presence of a rubber phase consisting of a mixture of diene rubber and a linear block copolymer based on a vinylaromatic monomer and 1,3 conjugated diene in which the block copolymer has a diene content of more than 80% by weight. However, whereas the use of this particular rubber phase has proved to be advantageous for improving the mechanical and gloss properties of vinylaromatic copolymers, such as ABS, in the case of homopolymers, such as high impact polystyrene, the results are poorer, particularly with respect to the impact strength.

The present invention therefore relates to a high impact polystyrene comprising a polymeric matrix and a rubber phase dispersed and/or grafted to the polymeric matrix, wherein the rubber phase consists of a mixture of:
i) a diene rubber; and
ii) a linear 1,3 conjugated styrene-diene block copolymer, wherein the block copolymer has a diene content of between 40 and 70% by weight.

The diene rubber (i) used in the high impact polystyrene of the present invention can be natural or synthetic. Particularly suitable synthetic diene rubbers are those consisting of a polymer of a 1,3 conjugated diene containing from 4 to 6 carbon atoms. Examples of these rubbers are polybutadiene, polybutadiene with medium cis and low viscosity, polyisoprene, copolymers of butadiene and/or isoprene with styrene or with other monomers containing more than 50% by weight of butadiene or isoprene, etc.

Diene rubber (i) which is particularly preferred is polybutadiene having:
- a Mooney viscosity of between 20 and 70, preferably between 25 and 65 ML 1+4 at 100°C, measured according to ASTM D 1646-80;
- a viscosity in solution of between 20 and 260 cps, preferably between 30 and 170 cps, measured in a 5% by weight styrene solution at 25°C;
- a content of 1,2 vinyl of between 5 and 35, preferably between 7 and 14% by weight; and
- a content of 1,4-cis of more than 20% by weight, preferably between 25 and 45%.

This type of polybutadiene can be prepared by conventional solution polymerization techniques in the presence of lithiumalkyls as catalysts, as described in "Encyclopedia of Polymer Science and Engineering", J. Wiley & Sons, 1985, Vol.2, page 537.

The polybutadiene can have a linear, branched or star-shaped structure. The latter structure can be easily obtained using a conventional polymerization initiator and, at the end of the polymerization, a polyfunctional coupling agent, or by using a polyfunctional polymerization initiator. Methods for preparing a star polybutadiene with a polyfunctional coupling agent are known and illustrated in U.S. patents 4.183.877, 4.340.690, 4.340.691 or in the published Japanese patent application 59/24.711. Methods for manufacturing a star-shaped polybutadiene with a polyfunctional initiator are illustrated, for example, in U.S. patents 4.182.818, 4.624.749, 3.668.263 and 3.785.510.

Polybutadienes having the above properties are available on the market under various trade-names, for example INTENE of EniChem Elastomeri S.p.A., BUNA CB of Bayer, etc.

The linear block elastomers (ii) can be represented by one of the following general formulae (I), (II) and (III):

(I) = S-B;

(II) = S₁-B-S₂; and

(III) = B₁-S₁-B₂-S₂;

wherein S, S₁ and S₂ are non-elastomeric polystyrene blocks having the same or different molecular weight, whereas B, B₁ and B₂ are elastomeric polymer blocks, based on a conjugated diene, having the same or different molecular weight.

In these linear elastomers or block copolymers, the non-elastomeric polymer blocks have a molecular weight of between 5,000 and 250,000 and the elastomeric ones a molecular weight of between 2,000 and 250,000. Between the polymer blocks S, S₁, S₂ and B, B₁, B₂, there may be "random" and/or "tapered" segments. In the "tapered" segment, the passage between the B, B₁ and B₂ blocks and the S, S₁ and S₂ blocks can be gradual, in the sense that the proportion of styrene in the diene polymer progressively increases in the direction of the non-elastomeric polymer block, whereas in the same way the proportion of conjugated diene progressively decreases. In the "random" segment the styrene monomers and conjugated diene are statistically arranged. The molecular weights of the "random" and/or "tapered" segments are preferably between 500 and 30,000.

These linear block copolymers can be prepared with techniques which are well known to experts in the field such as, for example, by first forming a styrene polymer block, by means of anionic polymerization, in an inert solvent and in the presence of an organometallic catalyst (initiator) based on lithium, subsequently forming the polymer block of conjugated diene by the addition of this monomer and, possibly, forming another polystyrene block by the addition of the corresponding monomer. Techniques for the preparation of block copolymers (ii) are described, for example, in U.S. patent 3.265.765. Further details on the physical and structural characteristics of these block elastomers are provided in B.C. Allport, "Block Copolymers" Applied Science Publishers Ltd., 1973.

Particularly preferred block copolymers (ii) of the present invention are those having a solution viscosity of not less than 20 cps, measured in a 5% by weight styrene solution at 25°C, preferably between 25 and 60 cps, and a styrene content not higher than 30% by weight. The block copolymers used in the present invention are also available on the market under the trade-names of BUNA BL of Bayer, ASAPRENE of Asahi Chemical Industry or NIPOL of Nippon Zeon.

The conjugated dienes which can be used for the preparation of the linear block copolymers (ii) are those having from 4 to 8 carbon atoms in the molecule such as, for example, 1,3-butadiene, isoprene, 2,3-dimethyl-1,3-butadiene, piperylene, etc, or their mixtures. 1,3-butadiene is particularly preferred.

In the mixture of the rubbery phase, the proportion of the rubber (i) with respect to the copolymer (ii) is regulated in relation to the properties of the end-product desired. In particular, in order to obtain a good balance between gloss and impact-strength, the rubber phase comprises from 1 to 60% by weight, preferably from 15 to 45%, of diene rubber (i).

The quantity of elastomeric material (i) and (ii) present in the high impact polystyrene of the present invention, varies from 5 to 20% by weight, preferably from 6 to 15%, with respect to the total weight of the polymer.

The polymer matrix of the polystyrene is basically obtained by the polymerization of styrene. The latter can be used in a mixture with other styrenic monomers such as mono-, di-, tri-, tetra- and pentachlorostyrene and the corresponding alphamethylstyrenes; styrenes alkylated in the benzene ring and the corresponding alphamethylstyrenes; ortho-, meta- and paramethylstyrene; ortho- and paramethyl-alphamethylstyrene, etc.

Even if the high impact polystyrene of the present invention can be manufactured by any of the conventional techniques used for producing high impact polymers such as, for example, by mass, solution, suspension, emulsion and mass-suspension polymerization, the advantages are much more evident when the polymerization is carried out in a continuous way and in mass solution.

According to this polymerization technique, the mixture of diene rubber (i) and block copolymer (ii) is dissolved in styrene, possibly in the presence of an inert solvent in a quantity which can vary from 5 to 100% by weight, with respect to the total monomer plus rubber, and the resulting solution is subjected to polymerization, possibly in the presence of an initiator. The polymerization is generally carried out in two or more vertical, tubular, stirred plug-flow reactors arranged in series. Vertical tubular reactors having a ratio length/diameter of more than 2 and, preferably, of between 3 and 10 are preferred.

Each reactor is maintained at a pressure which is higher than that at which the components fed evaporate. The pressure is normally between 0.5 and 5 bars, whereas the temperature is between 70 and 150°C, distributed along each reactor so as to provide two or more heated zones at different temperatures. It is preferable to obtain a polymerization conversion at the outlet of the first reactor of 20-60%, preferably 25-50%, by weight with respect to the monomers, and then complete the polymerization in the other reactors. It is also preferable for the residence time of the monomers in the first zone of the first reactor to be at least equal to that necessary for halving the concentration of the initiator at the polymerization temperature. In this way a higher content of rubber grafted on the polymeric matrix is obtained.

This latter parameter can be evaluated by the ratio between the quantity of final polymer product insoluble (gel) in a solvent, which is a mixture of toluene/methyl-ethylketone (57/43 by weight) at room temperature, and the quantity of rubber charged. This ratio is called grafting ratio and in the above process can vary from 2 to 4.

When the desired conversion degree has been reached (65-95%), the solvent and the unreacted styrene are removed under vacuum and at a high temperature (200-260°C) and the resulting polymer is extruded through a die, cooled and cut into granules of the desired dimensions. The gaseous products, removed under vacuum, are condensed and, possibly, recycled to the first reactor.

The dissolution of the rubbers (i) and (ii) and initiator in the mixture of styrene and optional solvent can be carried out in a single mixer or in two separate mixers; the styrene, the rubbers and the solvent are introduced into the first one, maintained at a temperature not higher than 100°C, whereas the initiator and, optionally, an additional amount of the solvent are introduced into the second one, which is not heated.

Examples of inert solvents which can be used in the preparation of the high impact polystyrene of the present invention comprise aromatic hydrocarbons, liquid at the polymerization temperature, such as toluene, ethylbenzene, xylenes, etc. or their mixtures.

The initiators used are the conventional ones used in the polymerization of styrene such as, for example, organic peroxide radicalic initiators. Examples of these initiators are: dibenzoyl peroxide, ter-butyl peroctoate, ter-butylperbenzoate, di-ter-butyl peroxide, 1,1'-di-ter-butylperoxy-3,3,5-trimethylcyclohexane, etc. These initiators are added in quantities of between 0.005 and 0.5% by weight with respect to the monomers.

The high impact polystyrene of the present invention contains rubber particles having an average diameter ranging from 0.1 to 5 micrometers, preferably from 0.1 to 1.5. These particles have both a capsule or "core-shell" morphology and a cellular morphology with occlusions of grafted and non-grafted polymer. The morphological structure of the materials can be observed and measured by means of the usual techniques of transmission or scanning electronic microscopy.

The high impact polystyrenes of the present invention have an excellent balance of physico-mechanical properties, such as impact-strength, at room temperature or below 0°C, elongation at break, tensile strength at yield and at break, elastic modulus, etc. and a high gloss. Owing to the above features, these copolymers are suitable for use in all high quality applications, typical of HIPS.

The following illustrative examples provide a better understanding of the present invention and its embodiment but do not limit its scope in any way.

In the examples, the following methods were used for determining the characteristics of the copolymers obtained:

### Mechanical properties

The notched Izod impact strength was determined at 23°C according to ASTM D256 on test samples 12.7 mm thick. The tensile stress at yield and at break, the elongation at break and the elastic modulus were measured according to ASTM D 638.

### Thermal properties

Vicat softening point was determined at 5 Kg, in oil, according to ISO 306.

### Rheological properties

Melt Flow Index (M.F.I.) was determined according to ASTM D1238, at 200°C and 5 Kg.

### Optical properties

Gloss was measured according to ASTM D523-80 with an angle of incidence of 20° on 75x175 mm plates with three steps, having dimensions of 75x27 mm, 75x93mm and 75x50 mm and thicknesses of 1.5 mm, 3 mm and 4 mm respectively. The sample was injection moulded at 215°C with a mould maintained at 35°C; the surface roughness factor of the mould was 0.02. The measurement was carried out in the central area of the plate having a thickness of 3 mm.

### EXAMPLE 1 (comparative)

The following products were charged into a CFSTR reactor, having a volume of 200 litres:
- 78.9 parts by weight of styrene;
- 10.5 parts by weight of a block copolymer BUNA BL 6533;
- 8.5 parts by weight of ethylbenzene;
- 1.9 parts by weight of mineral oil PRIMOL 352 (Esso);
- 0.075 parts by weight of zinc stearate;
- 0.49 parts by weight of a phenolic antioxidant (IRGANOX 245);
- 0.009 parts by weight of di-ter-butylperoxide;
- 0.02 parts by weight of n-dodecylmercaptan.

The resulting mixture was fed at a temperature of about 75°C and at a flow rate of 41 Kg/h to the top of a first full-type, plug-flow, vertical, tubular reactor, having a volume of 100 litres and a ratio length/diameter of 4.

The reactor was divided into three reaction zones, where the reaction mixture was maintained according to the following temperature profile:
- first zone: 120°C;
- second zone: 130°C.
- third zone: 137°C.

The reactor was equipped with a 48-horizontal blades stirrer rotating at 40 rpm. The pressure of the reactor was maintained at 3 bars.

The residence time of the reaction mixture in the first zone of the first reactor was about 45 minutes whereas the total residence time was about 2.2 hours.

The reaction mixture discharged continuously from the reactor and with a solids content of about 40% by weight, was fed to a second vertical, tubular reactor equal to the first, where the reaction mixture was maintained in accordance with the following temperature profile:
- first zone: 140°C;
- second zone: 150°C.

The residence time of the reaction mixture in the second reactor was about 2.2 hours.

The polymer mass leaving the second reactor had a content of solids of about 74% by weight, corresponding to a conversion of about 80% by weight.

The reaction mass was then heated to 250°C in a preheater and the solvent and non-reacted monomer devolatilized in an evaporator under vacuum at 10 mmHg.

The polymer discharged from the evaporator had a total content of volatiles of about 0.09% by weight and its properties are shown in the table.

### EXAMPLE 2 (comparative)

Example 1 was repeated, substituting the 10.5 parts by weight of block copolymer with 5 parts of polybutadiene rubber (INTENE 50 AB) and bringing the quantity of styrene to 84.4 parts by weight.

The properties of the resulting polymer are shown in the table.

### EXAMPLE 3 (comparative)

80 parts of the product described in example 1 and 20 parts of the product described in example 2 were mixed in a laboratory twin-screw extruder at 230°C.

The properties of the resulting product are shown in the table.

### EXAMPLES 4-5

Example 1 was repeated substituting the 10.5 parts by weight of block copolymer with mixtures of block copolymer and linear polybutadiene rubber (INTENE 50 AB) or star polybutadiene rubber (BUNA HX 565).

The peroxidic initiator was removed from the reaction mixture and the polymerization was carried out thermally. The thermal profiles of the reactors were then modified as follows:

### First reactor

- first zone: 125°C;
- second zone: 133°C;
- third zone: 140°C.

### Second reactor

- first zone: 145°C;
- second and third zone: 155°C.

The other operating conditions remained unchanged. The properties of the resulting polymers are shown in the table.

### EXAMPLES 6-7

Example 1 was repeated substituting the 10.5 parts by weight of block copolymer with mixtures of linear polybutadiene rubber (INTENE 50 AB) or star polybutadiene rubber (BUNA HX 565).

The properties of the resulting polymers are shown in the table.

**TABLE**

| Examples | 1 | 2 | 3 | 4 | 5 | 6 | 7 |
|---|---|---|---|---|---|---|---|
| Rubber % on final product (*) | 8.4 | 7.0 | 8.1 | 9.6 | 9.6 | 9.9 | 10.2 |
| BL 6533 (%) | 10.3 | --- | 11.2 | 8.3 | 8.3 | 7.7 | 7.1 |
| INTENE 50 AB (%) | --- | 5.0 | 1.4 | 2.3 | --- | --- | --- |
| HX 565 | --- | --- | --- | --- | 2.3 | 2.8 | 3.4 |

| Product properties | | | | | | | |
|---|---|---|---|---|---|---|---|
| Residual SM (ppm) | 240 | 250 | 350 | 240 | 300 | 250 | 260 |
| Total volatile products (ppm) | 300 | 300 | 450 | 300 | 400 | 330 | 350 |
| MFI (g/10') | 5.1 | 4.4 | 5.0 | 5.5 | 5.8 | 6.1 | 5.5 |
| Vicat (°C) | 88.0 | 90.0 | 86.0 | 90.0 | 88.0 | 88.0 | 88.0 |
| Tensile modulus (MPa) | 1800 | 1850 | 1800 | 1800 | 1750 | 1850 | 1700 |
| Tensile stress at yield (MPa) | 24.5 | 15.0 | 23.0 | 24.4 | 24.2 | 25.6 | 23.2 |
| Tensile stress at break (MPa) | 21.0 | 23.0 | 22.0 | 20.5 | 19.5 | 20.0 | 19.3 |
| Elongation at break (%) | 20.0 | 57.0 | 40.0 | 26.0 | 30.0 | 30.0 | 30.0 |
| Notched Izod impact strength (J/m) | | | | | | | |
| Specimen thickness 12.7 mm | 45 | 90 | 60 | 77 | 77 | 70 | 77 |
| Gloss (%) [20°] | 80 | 5 | 50 | 60 | 50 | 60 | 50 |

| | | | | | | | |
|---|---|---|---|---|---|---|---|
| (*) epressed as polybutadiene | | | | | | | |

## Claims

1. High impact polystyrene comprising a polymeric matrix and a rubber phase dispersed and/or grafted to said polymeric matrix, wherein the rubber phase consists of a mixture of:
i) a dienic rubber; and
ii) a linear 1,3 conjugated styrene-diene block copolymer, wherein said block copolymer has a diene content of between 40 and 70% by weight.

2. High impact polystyrene according to claim 1, wherein the diene rubber (i) consists of a polymer of a 1,3 conjugated diene containing from 4 to 6 carbon atoms.

3. High impact polystyrene according to claim 2, wherein the diene rubber (i) is polybutadiene, with a linear, branched or star structure, having:
- a Mooney viscosity of between 20 and 70, preferably between 25 and 65 ML 1+4 at 100°C, measured according to ASTM D 1646-80;
- a viscosity in solution of between 20 and 260 cps, preferably between 30 and 170 cps, measured in a 5% by weight in styrene solution at 25°C;
- a content of 1,2 vinyl of between 5 and 35, preferably between 7 and 14% by weight; and
- a content of 1,4-cis of more than 20% by weight, preferably between 25 and 45%.

4. High impact polystyrene according to claim 1, wherein the linear block copolymers (ii) can be represented by one of the following general formulae (I), (II) and (III):
(I) = S-B;
(II) = S₁-B-S₂; and
(III) = B₁-S₁-B₂-S₂;
wherein S, S₁ and S₂ are non-elastomeric polystyrene blocks whereas B, B₁ and B₂ are elastomeric polymeric blocks based on a conjugated diene.

5. High impact polystyrene according to claim 4, wherein the non-elastomeric polymer blocks have a molecular weight of between 5,000 and 250,000 and the elastomeric polymer blocks a molecular weight of between 2,000 and 250,000.

6. High impact polystyrene according to claims 4 or 5, wherein the conjugated dienes used for the preparation of the linear block copolymers (ii) are those having from 4 to 8 carbon atoms in the molecule.

7. High impact polystyrene according to any of the previous claims, wherein the rubber phase comprises from 1 to 60% by weight, of diene rubber (i), with respect to the total (i)+(ii).

8. High impact polystyrene according to any of the previous claims, wherein the quantity of elastomeric material (i) and (ii) varies from 5 to 20% by weight with respect to the total weight of the polymer.

9. Process for the preparation of the high impact polystyrene according to any of the previous claims which comprises dissolving the mixture of diene rubber (i) and block copolymer (ii) in styrene, possibly in the presence of an inert solvent in a quantity which can vary from 5 to 100% by weight with respect to the total monomer plus rubber, and polymerizing the resulting solution possibly in the presence of an initiator.
